# EUROPÄISCHE PATENTSCHRIFT

(11) **EP 3 248 701 B1**
(45) Veröffentlichungstag und Bekanntmachung des Hinweises auf die Patenterteilung: **21.08.2019**
(21) Anmeldenummer: 17020228.7
(22) Anmeldetag: 26.05.2017
(51) Int. Cl.: B08B 15/04, B23K 9/32, B23K 26/14, B23K 26/142, B08B 15/02, F24C 15/20

(54) **ERFASSUNGSHAUBE FÜR EINE ABSAUGHAUBE**
CAPTURE HOOD FOR AN EXTRACTOR HOOD
BOUCHE D'ASPIRATION POUR UNE HOTTE ASPIRANTE

(30) Priorität: 27.05.2016 DE 102016109804
(43) Veröffentlichungstag der Anmeldung: 29.11.2017
(73) Patentinhaber: ESTA Apparatebau GmbH & Co. KG, 89250 Senden (DE)
(72) Erfinder: Novosel, Michael, 89522 Heidenheim an der Brenz (DE)
(74) Vertreter: Meyer, Thorsten

(56) Entgegenhaltungen:
- EP-A2- 0 423 785
- EP-A2- 1 016 803
- CA-A- 890 112
- CN-U- 203 265 226
- GB-A- 1 506 886
- US-A- 5 536 206
- US-A1- 2013 263 403

## Beschreibung

Die Erfindung betrifft eine Erfassungshaube für eine Absauganlage mit einer Erfassungsöffnung zur Ansaugung zur Führung eines partikelbelasteten Luftstroms. Eine Ausführungsform betrifft einen Umbausatz für eine Erfassungshaube.

Mit Hilfe einer Absauganlage in Kombination mit einer damit verbundenden und dazu passenden Erfassungshaube, können verschiedenste Partikeln erfasst und abgeschieden werden.

Das Hauptanwendungsgebiet befindet sich hierbei im Bereich der Schweißrauchabsaugung. Hierbei ist eine Absaugung zu verwenden, sobald man es nicht mehr verhindern kann, dass gesundheitsgefährdende Stoffe bei einem Prozess entstehen.

Mit Hilfe der Hauben können diese Stoffe direkt am Entstehungsort erfasst werden, um so die Gefährdung für den Arbeiter auf ein Minimum abzusenken. Je nach Form einer Haube und Leistung der Anlage können diese Stoffe mehr-oder minder gut erfasst werden.

Nachteilig sind Verwirbelungen im Bereich des Randes von solchen Hauben, die zum einen den Luftstrom vom abzusaugenden Bereich weg stören und zum anderen kann es zu Ablagerungen auf dem Rand der Hauben kommen.

Aus der GB 1 506 886 A ist eine Erfassungshaube bekannt, die einen Nebenluftstrom am Rand der Erfassungshaube erfassen kann. Hierzu ist eine die eigentliche Erfassungshaube umgebende Hülle vorgesehen, die die Erfassungshaube nicht berührt und im Luftstrom hinter der Erfassungshaube befestigt ist.

Aufgabe der Erfindung ist es eine verbesserte Erfassungshaube für eine Absauganlage bzw. einen Umbausatz für eine bestehende Erfassungshaube bereit zu stellen, bei der die Luftstromführung verbessert ist.

Diese Aufgabe wird durch eine Erfassungshaube für eine Absauganlage nach den Merkmalen des Anspruchs 1 und einen Umbausatz nach den Merkmalen des Anspruchs 6 gelöst.

Erfindungsgemäß ist eine Erfassungshaube für eine Absauganlage mit einer Erfassungsöffnung zur Ansaugung zur Führung eines partikelbelasteten Luftstroms vorgesehen, wobei die Erfassungshaube mit einem trichter- oder tonnenförmigen Grundkörper mit einem überwiegend nach außen gerichteten Rand ausgebildet ist, und dass im oder zwischen Schichten des den Rand bildenden Materials wenigstens ein Luftdurchlasskanal ausgebildet ist, der einen Nebenluftstrom zum Innenbereich der Erfassungshaube ermöglicht.

Des weiteren sieht die Erfindung vor, dass der Luftdurchlasskanal schlitzförmig oder durch mehrere nebeneinanderliegende Öffnungen in der äußeren Kante des nach außen , senkrecht zur Erfassungsrichtung des Luftstroms, ausgeformten Rands ausgestaltet ist. Erfindungsgemäß sind innerhalb des Luftdurchlasskanals, bzw. mehrere Luftdurchlasskanäle abtrennend, Abstandselemente angeordnet oder ausgeformt die eine Ober- mit einer Unterseite des Rands des Grundkörpers verbinden.

Mit Hilfe einer neuartigen Erfassungshaube wird Effizienzsteigerung erzielt. Diese zeigt sich in verschiedenen Varianten.
a) Der Erfassungsbereich wird bei gleichem Volumenstrom gesteigert
b) Der Erfassungsbereich bleibt der gleiche, bei gleichzeitiger Senkung des Volumenstromes
c) Der Erfassungsbereich kann gesteigert werden, bei gleichzeitiger Senkung des Volumenstromes -> maximales Ergebnis
d) Es kann allgemein in einem Bereich erfasst werden, der vorher als "verloren" bzw. nicht gezielt absaugbar galt.

Zudem kann durch die vorgeschlagene Erfassungshaube zugleich die erforderliche Luftleistung und damit auch die damit gekoppelte elektrische Leistung gesenkt werden. Dabei bleibt das eingesetzte Filtermedium dennoch im gleichen Maße regenerierbar, wie die schon bestehenden Filterelemente.

Durch die Technologie wird zudem ermöglicht in Bereichen Stoffe zu erfassen, die eine herkömmliche Haube nicht mehr erfassen könnte.

Dem folgend ist von Vorteil weiterhin vorgeschlagen, dass die Abstandselemente im Querschnitt tropfenförmig und/oder stromlinienförmig ausgebildet sind.

Von Vorteil weisen die Abstandselemente an den dem Nebenluftstrom zugewandten Seiten runde Verlaufsformen auf.

Die Ober- und die Unterseite des Rands des Grundkörpers bzw. die den Rand bildenden Schichten sind nach einer weiteren vorteilhaften Variante der Erfindung aus verschiedenen, unterschiedlich harten Werkstoffen hergestellt.

Bevorzugterweise ist vorgesehen, dass die Erfassungshaube am Ende eines Absaugarms, welcher mit einer Absauganlage verbunden ist, angeschlossen werden kann.

Eine weitere Ausführungsform der Erfindung ist ein Umbausatz mit einer Erfassungshaube nach einem der Ansprüche 1-5 für eine Absauganlage, wobei die Erfassungshaube mit dem trichter- oder tonnenförmigen Grundkörper mit dem überwiegend nach außen gerichteten Rand ausgebildet ist, der sich dadurch auszeichnet, dass der Umbausatz eine untere Schicht zur Befestigung mit den Abstandselementen auf einer unteren Seite einer oberen den Rand der Erfassungshaube bildenden Schicht so ausgestaltet ist, dass sich zwischen der oberen Schicht und der untere Schicht ein Luftdurchlasskanal bildet, der den Nebenluftstrom zum Innenbereich der Erfassungshaube ermöglicht.

Dem folgend ist nach einer Variante vorgesehen, dass die Abstandselemente auf der unteren Schicht angeformt sind.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung einer erfindungsgemäßen Erfassungshaube von schräg oben,
- Fig. 2: eine schematische Darstellung der Erfassungshaube aus Fig. 1,
- Fig. 3: eine schematische Darstellung der Erfassungshaube aus Fig. 1 von schräg unten,
- Fig. 4: eine schematische Seitenansicht der Erfassungshaube aus Fig. 1,
- Fig. 5: eine schematische Schnittdarstellung der Erfassungshaube aus Fig. 4, und
- Fig. 6: eine schematische Schnittdarstellung durch ein Abstandselement im Randbereich einer Erfassungshaube.

Die in den Figuren gleichen Bezugsziffern bezeichnen gleiche oder gleich wirkende Elemente.

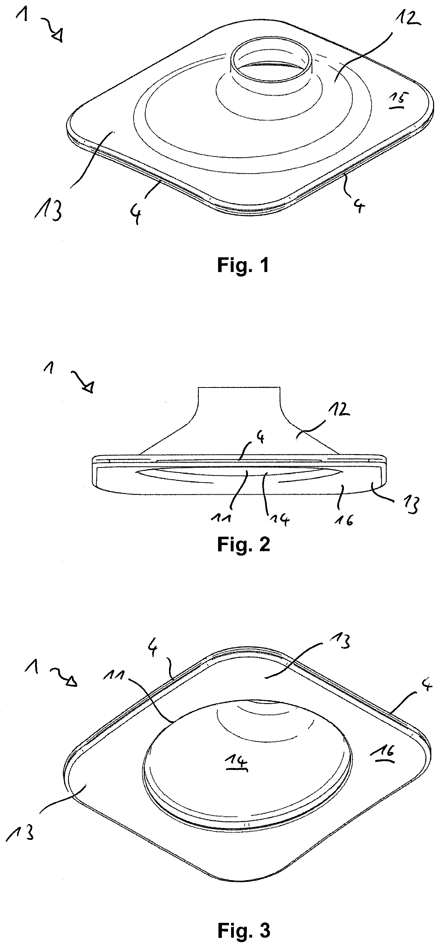

Die Fig. 1 bis 3 zeigen in verschiedenen Raumansichten eine beispielhafte Erfassungshaube 1 insbesondere für die Montage am Ende eines Absaugarm einer Absauganlage mit einer Erfassungsöffnung 11 zur Ansaugung zur Führung eines partikelbelasteten Luftstroms 3. Die Erfassungshaube 1 ist mit einem trichterförmigen Grundkörper 12 mit einem nach außen gerichteten Rand 13 ausgebildet. Im Material des Rands 13 sind mehrere Luftdurchlasskanäle 4 ausgebildet, der einen Nebenluftstrom 5 zum Innenbereich 14 der Erfassungshaube 1 ermöglicht. Die Luftdurchlasskanäle 4 sind schlitzförmig ausgestaltet.

Die Erfassungshaube bzw. deren Rand kann rund oder eckig ausgestaltet sein.

Grundlage der neu konzipierten Erfassungshaube ist ein Rand oder Flansch, der zusätzliche innenliegende "Kanäle" aufweist. Diese Luftdurchlasskanäle enden an der Innenseite der Erfassungshaube und machen sich auf der Außenseite durch "Schlitze" bemerkbar. Durch diese Schlitze kann dann im Umkehrschluss die partikelbeladene Luft angesaugt werden.

Zur besseren Erfassung können in diese Kanäle und Schlitze auch "Drallelemente" eingebracht werden, welche die Strömung noch zusätzlich unterstützen.

Die Funktionsweise basiert grundlegend auf dem Venturi-Effekt, bei dem durch das vorbeiströmen eines Primärvolumenstromes, durch Reibungsvorgänge, ein Sekundärluftstrom entsteht. In diesem Falle entsteht der Primärluftstrom in der Erfassungshaube selbst. Die mitgerissene Luft des Sekundärstromes wird durch die Kanäle gesaugt und sorgt somit für einen Volumenstrom an den Schlitzen und somit an der Außenseite der Erfassungshaube. Dies hat zur Folge, dass auch um die Erfassungshaube herum eine Luftbewegung entsteht und nicht nur an der Ansaugseite der Erfassungshaube. Somit kann der Absaugbereich merklich gesteigert werden. Der Effekt des erweiterten Randes oder Flansches kommt positiv hinzu, da dadurch gleichzeitig auch der Erfassungsradius erhöht werden kann.

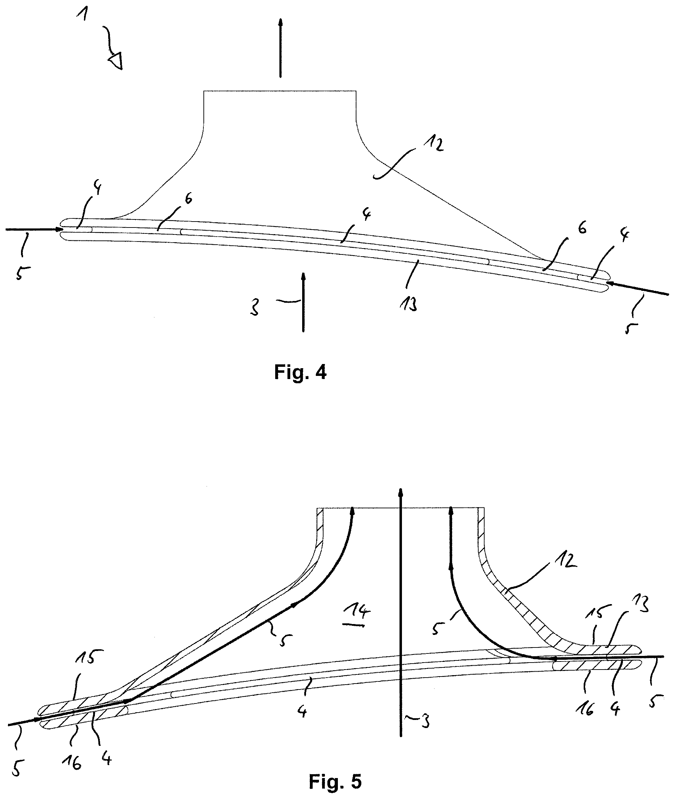

Fig. 4 zeigt den sich ausbildenden Luftstrom 3 und den Nebenluftstrom 5 zum Innenbereich 14 der Erfassungshaube 1. Innerhalb des Luftdurchlasskanals 4, bzw. die Luftdurchlasskanäle 4 abtrennend, sind Abstandselemente 6 ausgeformt, die eine Ober- 15 mit einer Unterseite 16 des Rands 13 des Grundkörpers 12 verbinden.

Dies wird in der schematischen Schnittdarstellung durch die Erfassungshaube 1 nach Fig. 5 verdeutlicht.

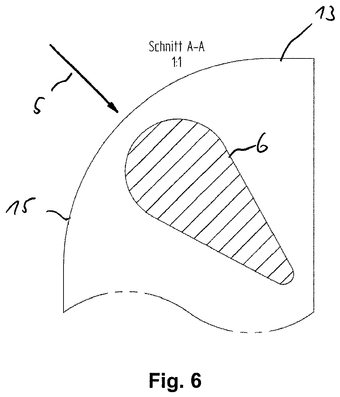

In Fig. 6 ist ein horizontaler Schnitt durch ein beispielhaftes Abstandselement 6 gezeigt. Die Abstandselemente 6 sind im Querschnitt tropfen- und stromlinienförmig ausgebildet. Daher weisen die Abstandselemente 6 an den dem Nebenluftstrom 5 zugewandten Seiten runde Verlaufsformen auf.

### Bezugszeichenliste

- 1: Erfassungshaube

- 11: Erfassungsöffnung
- 12: Grundkörper
- 13: Rand
- 14: Innenbereich
- 15: Oberseite
- 16: Unterseite

- 3: Luftstrom

- 4: Luftdurchlasskanal

- 5: Nebenluftstrom

- 6: Abstandselement

## Patentansprüche

1. Erfassungshaube (1) für eine Absauganlage mit einer Erfassungsöffnung (11) zur Ansaugung zur Führung eines partikelbelasteten Luftstroms (3),
wobei die Erfassungshaube (1) mit einem trichter- oder tonnenförmigen Grundkörper (12) mit einem am Ende der Haube angeordneten, im wesentlichen senkrecht zur Erfassungsrichtung des Luftstroms (3) nach außen gerichteten Rand (13) ausgebildet ist,
und dass im oder zwischen Schichten des den nach außen gerichteten Rand (13) bildenden Materials wenigstens ein Luftdurchlasskanal (4) ausgebildet ist, der einen Nebenluftstrom (5) zum Innenbereich (14) der Erfassungshaube (1) ermöglicht, wobei der Luftdurchlasskanal (4) schlitzförmig oder durch mehrere nebeneinanderliegende Öffnungen in der äußeren Kante des nach außen, senkrecht zur Erfassungsrichtung des Luftstroms (3), ausgeformten Rands (13) ausgestaltet ist, **dadurch gekennzeichnet, dass** innerhalb des Luftdurchlasskanals (4), bzw. mehrere Luftdurchlasskanäle 4 abtrennend, Abstandselemente (6) angeordnet oder ausgeformt sind, die eine Ober- (15) mit einer Unterseite (16) des Rands (13) des Grundkörpers (12) verbinden.

2. Erfassungshaube für eine Absauganlage nach Anspruch 1, **dadurch gekennzeichnet,**
**dass** die Abstandselemente (6) im Querschnitt tropfenförmig und/oder stromlinienförmig ausgebildet sind.

3. Erfassungshaube für eine Absauganlage nach einem der Ansprüche 1 oder 2,
**dadurch gekennzeichnet,**
**dass** die Abstandselemente (6) an den dem Nebenluftstrom (5) zugewandten Seiten runde Verlaufsformen aufweisen.

4. Erfassungshaube für eine Absauganlage nach einem der Ansprüche 1 bis 3,
**dadurch gekennzeichnet,**
**dass** die Ober- (15) und die Unterseite (16) des Rands (13) des Grundkörpers (12) bzw. die den Rand (13) bildenden Schichten aus verschiedenen, unterschiedlich harten Werkstoffen hergestellt sind.

5. Erfassungshaube für eine Absauganlage nach einem der Ansprüche 1 bis 4,
**dadurch gekennzeichnet,**
**dass** die Erfassungshaube (1) am Ende eines Absaugarms, welcher mit einer Absauganlage verbunden ist, angeschlossen werden kann.

6. Umbausatz mit einer Erfassungshaube (1) nach einem der Ansprüche 1-5 für eine Absauganlage, wobei die Erfassungshaube (1) mit dem trichter- oder tonnenförmigen Grundkörper (12) mit dem überwiegend nach außen gerichteten Rand (13) ausgebildet ist,
wobei der Umbausatz eine untere Schicht zur Befestigung mit den Abstandselementen (6) auf einer unteren Seite einer oberen den Rand (13) der Erfassungshaube (1) bildenden Schicht so ausgestaltet ist, dass sich zwischen der oberen Schicht und der untere Schicht der Luftdurchlasskanal (4) bildet, der den Nebenluftstrom (5) zum Innenbereich (14) der Erfassungshaube (1) ermöglicht.

7. Umbausatz mit einer Erfassungshaube nach Anspruch 6, wobei die Abstandselemente (6) auf der unteren Schicht angeformt sind.

## Claims

1. An extraction system capture hood (1) comprising a suction intake opening (11) for guiding a particle-laden airflow (3),
wherein the capture hood (1), having a funnel- or barrel-shaped main body (12), is formed with an outwardly directed rim (13) that is disposed substantially perpendicular to an extraction direction of said airflow (3) at an end of said hood,
and embodying at least one air duct (4) in or between layers of material forming said outwardly directed rim (13), said air duct facilitating auxiliary airflow (5) towards an interior region (14) of said capture hood (1), said air duct being shaped like a slot or embodied by means of a plurality of adjacent openings in the exterior edge of said outwardly directed rim (13) that is disposed perpendicular to said extraction direction of said airflow (3), **characterized in that** spacer elements (6) within said air duct (4) or separating a plurality of air ducts 4, respectively, are disposed or formed connecting a top surface (15) with a bottom surface (16) of said rim (13) of said main body (12).

2. The extraction system capture hood of claim 1,
**characterized in that**
said spacer elements (6) are at least one of drop-shaped and streamlined in cross section.

3. The extraction system capture hood of any one of claims 1 or 2,
**characterized in that**
said spacer elements (6) have round progressions on the sides facing said auxiliary airflow (5).

4. The extraction system capture hood of any one of claims 1 to 3,
**characterized in that**
said top (15) and bottom (16) surfaces of said rim (13) of said main body (12) and said layers forming said rim (13) are fabricated from different substances having different hardness.

5. The extraction system capture hood of any one of claims 1 to 4,
**characterized in that**
said capture hood (1) is connectable to an end of an extraction arm that is connected to an extraction system.

6. A conversion kit having an extraction system capture hood (1), the capture hood (1) having said funnel- or barrel-shaped main body (12) being formed with said predominantly outwardly directed rim (13), wherein said conversion kit a lower layer for attachment to said spacer elements (6) onto a bottom surface of an upper layer forming said rim (13) of said capture hood (1) is embodied such that said air duct (4) facilitating said auxiliary airflow (5) to the interior region (14) of said capture hood (1) is formed between the upper layer and the lower layer.

7. The conversion kit having a capture hood of claim 6, wherein said spacer elements (6) are integrally formed on the lower layer.

## Revendications

1. Hotte de captage (1) pour système d'aspiration avec une ouverture de captage (11) pour l'aspiration afin de guider un écoulement d'air (3) chargé de particules, la hotte de captage (1) étant formée avec un corps de base (12) en forme d'entonnoir ou de tonneau avec un bord (13) dirigé vers l'extérieur, disposé au bout de la hotte et dirigé sensiblement perpendiculairement à la direction de captage de l'écoulement d'air (3),
et en ce qu'au moins un conduit de passage d'air (4) est formé dans ou entre des couches du matériau formant le bord dirigé vers l'extérieur (13), laquelle conduit de passage (4) permet un écoulement d'air secondaire (5) vers la zone intérieure (14) de la hotte de captage (1), dans laquelle le canal de passage d'air (4) est en forme de fente ou constitué d'une pluralité d'ouvertures adjacentes dans le bord extérieur du bord (13) formé vers l'extérieur, perpendiculairement à la direction de captage de l'écoulement d'air (3), **caractérisé en ce que** des éléments d'espacement (6) qui relient une partie supérieure (15) à une face inférieure (16) du bord (13) du corps de base (12), sont disposés ou formés dans le canal de passage d'air (4) ou séparant une pluralité de conduits de passage d'air 4.

2. Hotte de captage pour un système d'aspiration selon la revendication 1, **caractérisé en ce que** les éléments d'espacement (6) présentent une section transversale en forme de goutte et/ou profilée.

3. Hotte de captage pour système d'aspiration selon l'une des revendications 1 ou 2, **caractérisée en ce que** les éléments d'espacement (6) des côtés orientés vers le flux d'air secondaire (5) présentent des formes de rangées rondes.

4. Hotte de captage pour système d'aspiration selon l'une des revendications 1 à 3, **caractérisée en ce que** les côtés supérieur (15) et inférieur (16) du bord (13) du corps de base (12) ou les couches formant le bord (13) sont constitués de matériaux différents et de dureté différente.

5. Hotte de captage pour système d'aspiration selon l'une des revendications 1 à 4, **caractérisée en ce que** la hotte de captage (1) peut être reliée à un système d'aspiration à l'extrémité d'un bras d'aspiration.

6. Kit de transformation avec une hotte de captage (1) selon l'une des revendications 1 à 5 pour système d'aspiration, **caractérisé en ce que** la hotte de captage (1) est formée avec le corps de base (12) en forme d'entonnoir ou de tonneau avec le bord (13) orienté principalement vers l'extérieur, dans lequel le kit de conversion est une couche inférieure destinée à être fixée aux éléments d'espacement (6) sur un côté inférieur d'une couche supérieure formant la périphérie (13) de la hotte de captage (1) de sorte qu'entre la couche supérieure et la couche inférieure, le canal de passage d'air (4) est formé permettant l'écoulement d'air secondaire (5) à l'intérieur (14) de la hotte de captage.

7. Kit de transformation avec une hotte de captage selon la revendication 6, les éléments d'espacement (6) étant formés d'un seul tenant sur la couche inférieure.
